Europäisches Patentamt

European Patent Office

Office européen des brevets

(19)

(11) Numéro de publication: **0 136 946**
**B1**

# FASCICULE DE BREVET EUROPEEN

(12)

(45) Date de publication du fascicule du brevet:
28.10.87

(21) Numéro de dépôt: **84401928.1**

(22) Date de dépôt: **27.09.84**

(51) Int. Cl.⁴: **G 01 F 1/704, F 01 D 11/00**

(54) **Méthode de mesure directe du débit d'air traversant un joint labyrinthe de turbomachine.**

(30) Priorité: **05.10.83 FR 8315844**

(43) Date de publication de la demande:
**10.04.85 Bulletin 85/15**

(45) Mention de la délivrance du brevet:
**28.10.87 Bulletin 87/44**

(84) Etats contractants désignés:
**DE FR GB**

(56) Documents cités:
**FR - A - 1 209 078**
**FR - A - 2 272 261**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Castellant, Jean-Pierre Jules Emile, 6, rue du Général de Gaulle, F-77770 Chartrettes (FR)**
Inventeur: **Habrard, Alain Gérard Joseph, Rue des Plantes Macherin, F-77630 Saint Martin en Biere (FR)**
Inventeur: **Pidebois, Jacques Eloi, 16, rue de Mazes, F-77140 Saint Pierre Les Nemours (FR)**

(74) Mandataire: **Moinat, François, S.N.E.C.M.A. Service des Brevets Boîte Postale 81, F-91003 Evry Cedex (FR)**

## Description

La présente invention concerne une méthode de mesure directe du débit d'air traversant un joint labyrinthe de turbomaschine.

On a constaté que le fonctionnement des turbomachines, notamment de celles utilisées pour la propulsion des avions, présente divers défauts, qui étaient considérés jusqu'à présent comme inexplicables; il s'agit notamment de réductions de la poussée pendant des durées variables, d'une propension au pompage, selon que la turbomachine est froide ou chaude, et, plus généralement de dégradations de ses performances, dans certaines conditions, mal définies, de fonctionnement.

L'idée est venue de rattacher ces défauts inexplicables du fonctionnement des turobmachines à des variations des fuites d'air des différents joints labyrinthes équipant la turbomachine, et notamment la sortie de son compresseur. Pour approfondir cette hypothèse, il serait nécessaire de mesurer avec précision les débit d'air traversant les différents joints labyrinthes d'une turbomachine, puisque les résultats de telles mesures permettraient d'analyser le comportement de la turbomachine et, d'interpréter les conditions thermodynamiques de fonctionnement de sa turbine à haute pression; la connaissance des débits d'air traversant les joints labyrinthes devrait permettre aussi de définir des procédures améliorées de rodage.

Le but principal de la présente invention est la mise au point d'une méthode de mesure directe du débit d'air traversant un joint labyrinthe, notamment sur une turbomachine, cette méthode devant être applicable aussi bien en régime stabilisé qu'en régime transitoire de la turbomachine, et ne devant nécessiter que des transformations très réduites de ladite machine. Elle est appliquée notamment au joint labyrinthe de sortie du compresseur de la turbomachine.

FR-A-1 209 078 décrit une méthode de mesure d'un débit gazeux, notamment un débit d'air, consistant à injecter dans le courant gazeux dont on veut mesurer le débit, un débit auxiliaire constant et déterminé avec précision d'un gaz d'addition, à brasser ledit courant gazeux et le gaz d'addition, à en prélever un échantillon et à doser la teneur en gaz d'addition afin d'en déduire le débit à mesurer.

Dans l'application selon l'invention à une mesure directe du débit d'air traversant un joint labyrinthe de sortie du compresseur d'une turbomachine, la méthode comporte les étapes suivantes:

a) on injecte par une conduite un premier débit d1 d'un gaz, chimiquement neutre à l'égard des constituants de l'air, tel que du gaz carbonique dans le débit d'air sortant du joint labyrinthe, dans l'enveloppe fermée de turbomachine;

b) simultanément, on injecte en aval de la vanne de réglage d'un prélèvement avionneur, effectué par une tubulure branchée en amont du joint labyrinthe, un second débit d2 dudit gaz, les deux débits d1 et d2 étant maintenus dans un rapport constant;

c) on prélève une fraction du mélange homogène obtenu en un point situé à faible distance en amont de la turbine à haute pression;

d) on prélève de même une fraction du mélange formé dans le prélèvement avionneur;

e) les concentrations en gaz injecté desdits prélèvements obtenus en c) et d) sont comparés au moyen d'un analyseur différentiel de gaz;

f) on ajuste ladite vanne de réglage du prélèvement avionneur de manière que l'analyseur indique l'égalité des deux concentrations en gaz injecté et on mesure le débit Dp dudit prélèvement avionneur au moyen d'un débitmètre placé en aval de ladite vanne de réglage;

g) on déduit le débit D1 de l'air sortant du joint labyrinthe des valeurs précédentes, par la relation:

$$D1 = Dp \quad x \quad \frac{d1}{d2}$$

En variante, la méthode comporte les étapes suivantes:

a) on injecte par une conduite un premier débit d1 d'un gaz, chimiquement neutre à l'égard des constituants de l'air, tel que du gaz carbonique, dans le débit d'air sortant du joint labyrinthe, dans l'enveloppe fermée de turbomachine;

b) simultanément, on injecte en aval de la vanne de réglage d'un prélèvement avionneur, effectué par une tubulure branchée en amont du joint labyrinthe, un second débit d2 dudit gaz, les deux débits d1 et d2 étant maintenus dans un rapport constant;

c) on prélève une fraction du mélange homogène obtenu en un point situé à faible distance en amont de la turbine à haute pression;

d) on prélève de même une fraction du mélange formé dans le prélèvement avionneur;

e) on mesure la concentration C2 du mélange prélevé à l'étape c);

f) on mesure de même la concentration C1 du mélange prélevé à l'étape d);

g) on mesure le débit Dp du prélèvement avionneur au moyen d'un débitmètre;

h) on déduit le débit D1 de l'air sortant du joint labyrinthe par la relation:

$$D1 = Dp \quad x \quad \frac{d1}{d2} \quad x \quad \frac{C1}{C2}$$

Bien entendu, la méthode de mesure selon la présente invention peut être mise en œuvre en injectant un gaz quelconque, pourvu qu'il soit chimiquement neutre à l'égard des constituants de l'air; c'est cependant le gaz carbonique qui est utilisé de préférence, en raison de ce qu'il est facilement disponible, peu coûteux, sans danger, et susceptible d'être stocké en grande quantité à l'état liquide sous une pression par exemple de l'ordre de 50 bars. Une bouteille de gaz carbonique liquéfié constitue une source de gaz d'injection, très avantageuse pour la mise en œuvre de la méthode de mesure selon la présente invention, dans la mesure où le gaz qui sort de la bouteille se trouve à une pression qui ne dépend que de la température ambiante, et non pas du degré de remplissage de la bouteille. Enfin, la teneur en gaz carbonique du mélange prélevé selon la présente invention peut être déterminée aisément, par exemple à l'aide des analyseurs de gaz qui existent généralement dans les services d'essais au banc des turbomachines. Bien entendu, comme l'air avec lequel le gaz carbonique se mélange dans la mise en œuvre de la méthode de mesure selon la présente invention, contient lui-même une fraction déterminée de gaz carbonique, il faut tenir compte de cette dernière dans le calcul du débit d'air traversant le joint labyrinthe à partir du résultat de la mesure de la concentration du mélange prélevé en gaz carbonique.

De préférence, l'injection de gaz et le prélèvement de mélange pour la mise en œuvre de la méthode de mesure selon la présente invention, ont lieu par l'intermédiaire de prises existant normalement au niveau du joint labyrinthe de sortie et au niveau de la turbine, et destinées à des mesures de températures et de pressions.

En effet, les turbomachines en cours d'essai, que ce soit au stade des prototypes ou des développements, sont généralement équipées de nombreuses prises de mesures, qui sont destinées généralement à des mesures de températures et de pressions, et qui sont constituées la plupart du temps par des tubes de faible diamètre. Ces tubes de prises sont prévus notamment au niveau du joint labyrinthe de sortie du compresseur de la turbomachine, et d'autres au niveau de sa turbine, en nombre plus que suffisant pour permettre, les premiers, l'injection, et les autres, le prélèvement du gaz carbonique.

A titre d'exemples, on a décrit ci-dessous et illustré schématiquement au dessin annexé plusieurs modes d'exécution de la méthode de mesure selon la présente invention, appliqués à la mesure directe du débit d'air traversant le joint labyrinthe de sortie du compresseur d'une turbomachine.

La figure 1 est le schéma d'une installation permettant d'appliquer la méthode selon la présente invention, à la mesure directe du débit d'air traversant un joint labyrinthe de turbomachine.

La figure 2 est un schéma illustrant partiellement l'implantation de l'installation de la figure 1 en vue de la mesure du débit d'air traversant le joint labyrinthe de sortie du compresseur de la turbomachine.

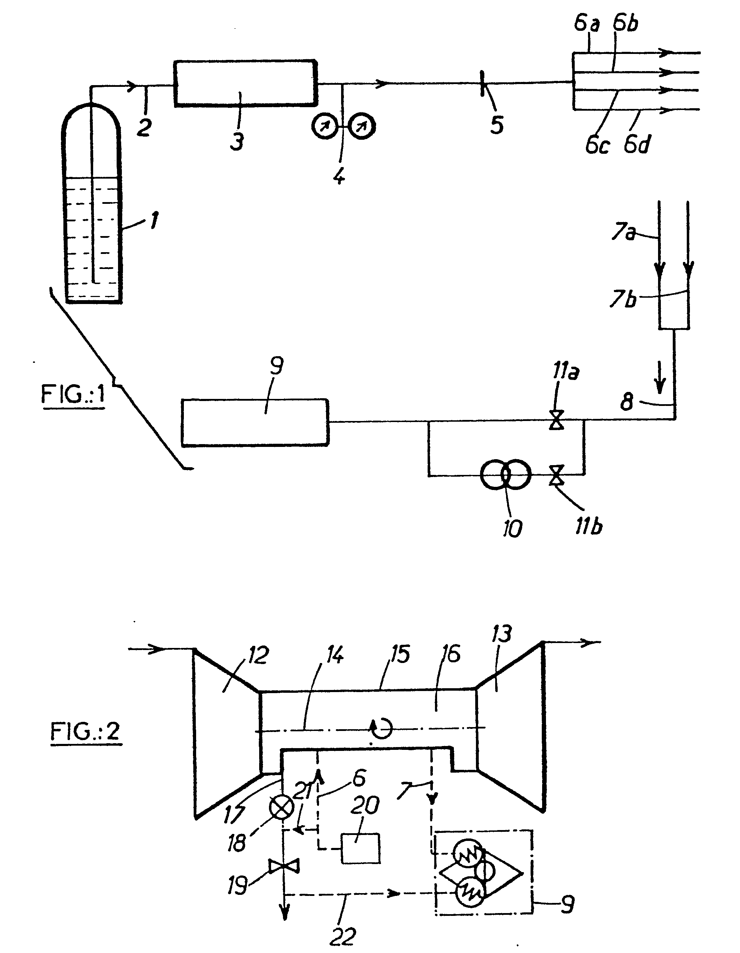

Sur la figure 1, 1 désigne une bouteille qui, lorsqu'elle est pleine, contient 15 kg de gaz carbonique, sous une pression de 50 bars lorsque la température ambiante est de 15 °C. La conduite 2 qui est raccordée à la tubulure de sortie – non représentée – de la bouteille 1 traverse un dispositif de réchauffage, généralement électrique, 3, qui est par exemple d'une puissance de l'ordre de 500 W; au-delà du dispositif de réchauffage 3, un détendeur 4 est branché sur la conduite 2; ce détendeur réglable est ajusté généralement de manière que le gaz carbonique parvienne, sous une pression amont d'environ 25 bars, au niveau d'un diaphragme 5, qui réduit sa pression à environ 10 bars; c'est sous cette pression réduite que la conduite 2 alimente ensuite en parallèle quatre tubes d'injection, choisis par exemple parmi les douze prises de températures et de pressions dont la turbomachine en cours d'essai est équipée en permanence au niveau du joint labyrinthe de sortie de son compresseur; les quatre tubes d'injection, 6a à 6d ont par exemple une longueur de 1 mètre et un diamètre intérieur de 1 mm. Dans ces conditions, on peut calculer aisément que, lorsque la conduite 2 les alimente de façon continue en gaz carbonique sous une pression de 10 bars, les quatre tubes 6a à 6d injectent dans la turbomachine un débit total de gaz carbonique voisin de 1,36 g/s.

Sur la figure 1, on a également représenté deux des sept prises de températures et de pressions dont la turbomachine considérée est équipée au niveau de sa turbine; les deux prises choisies sont par exemple également des tubes, 7a et 7b, de longueur égale à 1 mètre et de diamètre intérieur de 1 mm. Leurs extrémités extérieures sont raccordées en parallèle à une conduite de prélèvement unique, 8, qui aboutit à un analyseur de mélange gazeux, 9, d'un type connu, permettant de déterminer la fraction molaire de gaz carbonique contenue dans le mélange gazeux prélevé par les tubes 7a et 7b. Avec une turbomachine considérée à titre d'exemple, les deux tubes 7a et 7b permettent de prélever un débit total de mélange gazeux de l'ordre de 0,3 g/s lorsque la turbomachine fonctionne à plein gaz. La pression de prélèvement est alors suffisante pour que le mélange prélevé parvienne spontanément à l'analyseur 9. Il n'en est plus de même lorsque la turbomachine fonctionne au ralenti; la pression de prélèvement n'étant plus alors que de l'ordre de 1,2 à 1,3 bar, il est nécessaire d'insérer dans la conduite 8 une pompe d'extraction 10, respectivement en fermant une valve 11a et en ouvrant une valve 11b. Dans le même cas pris à titre d'exemple, le débit prélevé au ralenti sera alors de l'ordre de 0,06 g/s.

Il convient de noter qu'une installation telle que celle représentée schématiquement sur la figure 1 présente un temps de réponse global non négligeable, en particulier, la conduite de prélèvement 8 introduit, si elle a par exemple une longueur de 10 m et un diamètre intérieur de 6 mm, un temps de réponse de l'ordre de 0,6 s. au ralenti et de 1 s. à plein gaz, tandi que l'analyseur 9 lui-même présente un temps de réponse inférieur à 1 s.

Selon la présente invention, les tubes de prises tels que 6a à 6d et 7a, 7b (figure 1) peuvent être avantageusement prévus même sur une turbomachine en exploitation, ces tubes de prises permettant de contrôler de temps en temps l'évolution des jeux dans les joints labyrinthes et de déterminer les programmes de maintenance des joints en fonction des résultats de ces mesures, par exemple périodiques.

Sur la figure 2, 12 désigne le compresseur et 13 la turbine d'une turbomachine; 14 désigne l'arbre de son corps à haute pression (non représenté), et 15, le carter interne de la chambre de combustion.

16 désigne l'enveloppe fermée délimitée notamment par les éléments 12 à 15 de la turbomachine. 17 désigne une tubulure qui est branchée en amont du joint labyrinthe de sortie – non représenté – du compresseur 12; cette tubulure, qui existe sur de nombreux types de turbomachines, destinées à équiper des avions, est désignée, dans la technique aéronautique, sous le nom de «Prélèvement avionneur», et elle est destinée à alimenter en air comprimé diverses servitudes de l'avion. Dans la conduite 17, constituant ce prélèvement avionneur, sont insérés, tout d'abord une vanne de réglage 18, puis, en aval de celle-ci, un débitmètre 19.

On a schématisé en traits interrompus, sur la figure 2, quelques-uns des éléments de l'installation de la figure 1 qui sont utilisés dans un mode d'exécution particulier de la méthode de mesure selon la présente invention. Le bloc 20 désigne une source de gaz carbonique, constituée par exemple par le circuit supérieur de la figure 1 en amont du diaphragme 5. Dans ce mode d'exécution de l'invention, la conduite d'alimentation 2 est ramifiée en un dispositif d'injection 6, qui peut correspondre aux quatre tubes d'injection 6a à 6d de la figure 1, et en une dérivation 21, qui est raccordée au prélèvement avionneur en aval de la vanne de réglage 18. Sur la figure 2, le dispositif de prélèvement, 7, qui peut être constitué par exemple par les deux tubes de prises, 7a et 7b, prévus sur la figure 1, est raccordé avec l'intérieur de l'enveloppe fermée 16, à faible distance en amont de l'étage à haute pression de la turbine 13. Dans cet exemple de réalisation, l'analyseur de mélange gazeux, 9, est un analyseur différentiel à pont de Wheatstone, comportant deux tubulures d'entrée, auxquelles sont respectivement raccordées la conduite de prélèvement 7, précédemment mentionnée, ainsi qu'une conduite 22, dont l'autre extrémité est raccordée au prélèvement avionneur 17, en aval de son débitmètre 19. De cette façon, deux des branches du pont de Wheatstone dont est équipé l'analyseur différentiel sont influencées respectivement par les mélanges gazeux qui lui sont amenés respectivement par les conduites 7 et 22.

La méthode de mesure selon la présente invention est mise en œuvre de la façon suivante à l'aide de l'installation illustrée schématiquement sur la figure 2:

On désignera par $d_1$ le débit du gaz carbonique qui est fourni par la source 20 et qui est injecté par la conduite d'injection 6 dans l'enveloppe 16, par $d_2$ le débit de gaz carbonique qui est injecté par la conduite 21 dans la prélèvement avionneur 17 en aval de sa vanne de réglage 18, par $D_1$ le débit du mélange gazeux prélevé dans l'enveloppe 16 par la conduite 7, et par $D_p$ le débit du mélange gazeux prélevé par la conduite 22 en aval du débitmètre 19 du prélèvement avionneur 17. Pourvu que le gaz carbonique soit envoyé aux mêmes températures et aux mêmes pressions dans les conduites 6 et 21, et que les débits $d_1$ et $d_2$ soient calibrés par des cols soniques, le rapport $d_1/d_2$ reste constant et indépendant des variations respectives de $d_1$ et $d_2$; la valeur de ce rapport, $d_1/d_2$, est déterminée préalablement au banc d'essai. On ajuste alors la vanne de réglage 18 du prélèvement avionneur 17 de façon à égaliser les concentrations du gaz carbonique dans les deux mélanges gazeux qui circulent respectivement dans les conduites 7 et 22, avec les débits $D_1$ et $D_p$. Dans ces conditions, le débit d'air traversant le labyrinthe de sortie du compresseur 12 vaut sensiblement:

$$D_1 = D_p \times \frac{d_1}{d_2} \qquad (1)$$

Lorsque le point de fonctionnement de la turbomachine varie, le pont de Wheatstone de l'analyseur différentiel 9 est déséquilibré et il doit être alors ramené à l'équilibre par un nouveau réglage de la vanne 18. L'erreur obtenue sur le débit d'air traversant le joint labyrinthe, $D_1$, ne dépasse pas alors quelques pourcents, car il correspond sensiblement à la somme des erreurs sur les débits $d_1$, $d_2$ et $D_p$, ce dernier étant évidemment fourni par le débitmètre 19.

Dans une variante de la méthode de mesure selon la présente invention, qui vient d'être décrite, l'analyseur différentiel 9 est remplacé par un analyseur ordinaire, qui indique directement la concentration du mélange gazeux en gaz carbonique. Le même analyseur est utilisé successivement pour mesurer la concentration, $C_2$ du mélange prélevé par la conduite 7, puis la concentration, $C_1$, du mélange qui circule dans le prélèvement avionneur 18, en aval de l'embranchement de la conduite 21. Le débit de l'air traversant le joint labyrinthe de sortie du compresseur 12 est alors donné par la relation:

$$D_1 = D_p \times \frac{d_1}{d_2} \quad \times \frac{C_1}{C_2} \qquad (2)$$

Avec cette méthode, il n'est plus nécessaire d'ajuster la vanne de réglage 18 du prélèvement avionneur 17. Le résultat obtenu est cependant entaché d'une erreur supplémentaire, en raison des mesures des concentrations $C_1$ et $C_2$. D'autre part, lors des régimes transitoires rapidement variables de la turbomachine en cours d'essai, il est nécessaire d'utiliser deux analyseurs distincts de mélange gazeux, pour mesurer simultanément les concentrations $C_1$ et $C_2$; ceci entraîne des erreurs supplémentaires, puisque les étalonnages des deux analyseurs peuvent différer légèrement et que, en outre, les deux conduites sur lesquelles les deux analyseurs distincts sont branchés respectivement peuvent introduire des temps de réponse différents.

La présente invention n'est pas limitée aux modes d'exécution précédemment décrits. Il englobe toutes leurs variantes.

Les résultats obtenus par la méthode de mesure directe du débit d'air traversant un joint labyrinthe de turbomachine sont aussi intéressants pendant la phase de développement de celle-ci que pendant la maintenance de la turbomachine en exploitation. Pendant le développement d'une turbomachine, les résultats obtenus par la méthode selon la présente invention permettent une meilleure connaissance du rendement de la turbine à haute pression, ce qui permet de guider les choix techniques correspondants, et aussi une meilleure connaissance de la courbe de fonctionnement de son compresseur, ce qui permet de réduire ses tedances au pompage. Les résultats obtenus par la méthode de mesure selon la présente invention au cours de l'exploitation d'une turbomachine permettent par ailleurs de déterminer si la turbine ou son joint labyrinthe doivent être démontés. Tous ces avantages sont obtenus par des moyens très simples et d'un coût très réduit. La connaissance du débit d'air traversant un joint labyrinthe de turbomachine permet également de maîtriser les pressions dans ses différentes enceintes, dont dépend notamment la tenue du palier de butée de son arbre principal.

**Revendications**

1. Méthode de mesure directe du débit d'air traversant un joint labyrinthe de sortie du compresseur (12) d'une turbomachine comportant les étapes suivantes:

a) on injecte par une conduite (6) un premier débit d1 d'un gaz, chimiquement neutre à l'égard des constituants de l'air, tel que du gaz carbonique, dans le débit d'air sortant du joint labyrinthe, dans l'enveloppe fermée (16) de la turbomachine;

b) simultanément, on injecte en aval de la vanne de réglage (18) d'un prélèvement avionneur, effectué par une tubulure (17) branchée en amont du joiunt labyrinthe, un second débit d2 dudit gaz, les deux débits d1 et d2 étant maintenus dans un rapport constant;

c) on prélève une fraction du mélange homogène obtenu en un point (7) situé à faible distance en amont de la turbine à haute pression (13);

d) on prélève de même une fraction du mélange formé dans le prélèvement avionneur;

e) les concentrations en gaz injecté desdits prélèvements obtenus en c) et d) sont comparés au moyen d'un analyseur différentiel de gaz (9);

f) on ajuste ladite vanne de réglage (18) du prélèvement avionneur (17) de manière que l'analyseur différentiel (9) en e) indique l'égalité des deux concentrations en gaz injecté et on mesure le débit Dp dudit prélèvement avionneur au moyen d'un débitmètre (19) placé en aval de ladite vanne de réglage (18);

g) on déduit le débit D1 de l'air sortant du joint labyrinthe des valeurs de débits $d_1$, $d_2$ et $D_p$ précédentes par la relation:

$$D1 = Dp \times \frac{d_1}{d_2}$$

2. Méthode de mesure directe du débit d'air traversant un joint labyrinthe de sortie du compresseur (12) d'une turbomachine comportant les étapes suivantes:

a) on injecte par une conduite (6) un premier débit d1 d'un gaz, chimiquement neutre à l'égard des constituants de l'air, tel que du gaz carbonique, dans le débit d'air sortant du joint labyrinthe dans l'enveloppe fermée (16) de la turbomachine;

b) simultanément, on injecte en aval de la vanne de réglage (18) d'un prélèvement avionneur, effectué par une tubulure (17) branchée en amont du joint labyrinthe, un second débit d2 dudit gaz, les deux débits d1 et d2 étant maintenus dans un rapport constant;

c) on prélève une fraction du mélange homogène obtenu en un point (7) situé à faible distance en amont de la turbine à haute pression (13);

d) on prélève de même une fraction du mélange formé dans le prélèvement avionneur;

e) on mesure la concentration C2 du mélange prélevé à l'étape c);

f) on mesure de même la concentration C1 du mélange prélevé à l'étape d);

g) on mesure le débit Dp du prélèvement avionneur au moyen d'un débitmètre (19);

h) on déduit le débit D1 de l'air sortant du joint labyrinthe par la relation:

$$D1 = Dp \times \frac{d1}{d2} \times \frac{C1}{C2}$$

3. Méthode de mesure selon la revendication 2, caractérisé en ce qu'un analyseur de gaz unique est utilisé successivement lors des étapes e) et f) de la méthode.

4. Méthode de mesure selon la revendication 2, caractérisée en ce que deux analyseurs de gaz distincts sont utilisés simultanément lors des étapes e) et f) de la méthode.

5. Méthode de mesure selon l'une quelconque des revendications 1 à 4, caractérisée en ce que les injections de gaz aux étapes a) et b) se font à partir d'une source unique (20).

6. Méthode de mesure selon l'une quelconque des revendications 1 à 5, caractérisée par le fait que l'injection de gaz et le prélèvement de mélange ont lieu par l'intermédiaire de prises existant normalement au niveau du joint labyrinthe de sortie de compresseur et au niveau de la turbine, et destinées à des mesures de températures et de pressions.

**Patentansprüche**

1. Verfahren zur direkten Messung des Luftdurchsatzes durch eine Labyrinthdichtung am Ausgang des Verdichters (12) einer Turbomaschine mit folgenden Schritten:

a) man führt durch eine Leitung (6) eine Durchsatzmenge d1 eines gegenüber den Bestandteilen der Luft chemisch neutralen Gases, z.B. Kohlendioxyd, in den aus der Labyrinthdichtung austretenden Luftdurchsatz innerhalb der geschlossenen Hülle (16) der Turbomaschine ein,

b) gleichzeitig führt man stromabwärts des Regulierungsschiebers (18) eines Luftabgriffs, der von einem stromaufwärts der Labyrinthdichtung abzweigenden Rohr (17) gebildet ist, eine zweite Durchsatzmenge d2 des genannten Gases ein, wobei die beiden Durchsatzmengen d1 und d2 in einem konstanten Verhältnis gehalten werden,

c) man entnimmt einen Bruchteil der homogenen Mischung, die in einem in geringem Abstand stromaufwärts der Hochdruckturbine (13) gelegenen Punkt (7) erhalten wird,

d) man entnimmt gleichfalls einen Bruchteil der in dem Luftabgriff gebildeten Mischung,

e) man vergleicht mit Hilfe eines Gas-Differential-Analysators (9) die Konzentrationen des eingeführten Gases der in den Verfahrensschritten c) und d) durchgeführten Entnahmen,

f) man justiert den genannten Regulierungsschieber (18) des Luftabgriffs (17) derart, dass der Gas-Differential-Analysator (9) in Verfahrensschritt e) Gleichheit der beiden Konzentrationen an eingeführtem Gas anzeigt und misst den Durchsatz Dp des genannten Luftabgriffs mit Hilfe eines stromabwärts des Regulierungsschiebers (18) angeordneten Durchsatzmessers (19),

g) man leitet den Durchsatz D1 der aus der Labyrinthdichtung austretenden Luft aus den Durchsatzmengen d1, d2 und Dp nach folgender Beziehung ab:

$$D1 = Dp \times \frac{d_1}{d_2}$$

2. Verfahren zur direkten Messung des Luftdurchsatzes durch eine Labyrinthdichtung am Ausgang des Verdichters (12) einer Turbomaschine mit folgenden Schritten:

a) man führt durch eine Leitung (6) eine Durchsatzmenge d1 eines gegenüber den Bestandteilen der Luft chemisch neutralen Gases, z.B. Kohlendioxyd, in den aus der Labyrinthdichtung austretenden Luftdurchsatz innerhalb der geschlossenen Hülle (16) der Turbomaschine ein,

b) gleichzeitig führt man stromabwärts des Regulierungsschiebers (18) eines Luftabgriffs, der von einem stromaufwärts der Labyrinthdichtung abzweigenden Rohr (17) gebildet ist, eine zweite Durchsatzmenge d2 des genannten Gases ein, wobei die beiden Durchsatzmengen d1 und d2 in einem konstanten Verhältnis gehalten werden,

c) man entnimmt einen Bruchteil der homogenen Mischung, die in einem in geringem Abstand stromaufwärts der Hochdruckturbine (13) gelegenen Punkt (7) erhalten wird,

d) man entnimmt gleichfalls einen Bruchteil der in dem Luftabgriff gebildeten Mischung,

e) man misst die Konzentration C2 der in dem Verfahrensschritt c) entnommenen Mischung,

f) man misst gleichfalls die Konzentration C1 der in dem Verfahrensschritt d) entnommenen Mischung,

g) man misst den Durchsatz Dp des Luftabgriffs mit Hilfe eines Durchsatzmessers (19),

h) man leitet den Durchsatz D1 der aus der Labyrinthdichtung austretenden Luft nach folgender Beziehung ab:

$$D1 = Dp \times \frac{d1}{d2} \times \frac{C1}{C2}$$

3. Messverfahren nach Anspruch 2, dadurch gekennzeichnet, dass bei den Verfahrensschritten e) und f) nacheinander nur ein Gasanalysator verwendet wird.

4. Messverfahren nach Anspruch 2, dadurch gekennzeichnet, dass bei den Verfahrensschritten e) und f) gleichzeitig zwei getrennte Gasanalysatoren verwendet werden.

5. Messverfahren nach einem der Ansprüche 1 bis 4, dadurch gekennzeichnet, dass die Gaseinführung in den Verfahrensschritten a) und b) aus einer einzigen Quelle (20) erfolgt.

6. Messverfahren nach einem der Ansprüche 1 bis 5, dadurch gekennzeichnet, dass die Gaseinführung und die Entnahme der Mischung über Abgriffe erfolgen, die normalerweise in Höhe der Labyrinthdichtung am Ausgang des Verdichters und in Höhe der Turbine vorgesehen sind und die zur Messung von Temperatur und Druck bestimmt sind.

**Claims**

1. Method of directly measuring the airflow through a labyrinth seal at the outlet of the compressor (12) of a turbo machine comprising the following steps:

a) injecting through a pipe (6) a first flow d1 of a gas, chemically neutral with respect to the constituents of air, such as carbon dioxide into the airflow leaving the labyrinth seal, within the enclosed casing (16) of the turbo machine;

b) simultaneously injecting downstream of the control valve (18) of an auxiliaries bleed, effected through a branch pipe (17) upstream of the labyrinth seal, a second flow d2 of the said gas, the two flows d1 and d2 being maintained at a constant ratio;

c) withdrawing a fraction of the homogeneous mixture obtained at a point (7) located a small distance upstream of the high pressure turbine (13);

d) similarly withdrawing a fraction of the mixture formed in the auxiliaries bleed;

e) the concentrations of injected gas in the said fractions taken at c) and d) are compared by means of a differential gas analyser (9);

f) adjusting the said control valve (18) of the auxiliaries bleed (17) such that the differential analyser (9) of e) indicates equality of the two concentrations of injected gas and measuring the flow Dp of the said auxiliaries bleed by means of a flow meter (19) placed downstream of the said control valve (18);

g) deducing the flow D1 of air leaving the labyrinth seal from the values of the aforesaid flows d1, d2 and Dp by the relationship:

$$D1 = Dp \times \frac{d_1}{d_2}$$

2. Method of directly measuring the airflow through a labyrinth seal at the outlet of the compressor (12) of a turbo machine comprising the following steps:

a) injecting through a pipe (6) a first flow d1 of a gas, chemically neutral with respect to the constituents of air, such as carbon dioxide, into the airflow leaving the labyrinth seal, within the enclosed casing (16) of the turbo machine;

b) simultaneously injecting downstream of the control valve (18) of an auxiliaries bleed, effected through a branch pipe (17) upstream of the labyrinth seal, a second flow d2 of the said gas, the two flows d1 and 42 being maintained at a constant ratio;

c) withdrawing a fraction of the homogeneous mixture obtained at a point (7) located a small distance upstream of the high pressure turbine (13);

d) similarly withdrawing a fraction of the mixture formed in the auxiliaries bleed;

e) measuring the concentration C2 of the mixture withdrawn at step c);

f) similarly measuring the concentration C1 of the mixture withdrawn at step d);

g) measuring the flow Dp of the auxiliaries bleed by means of a flow meter (19);

h) deducing the flow D1 of air leaving the labyrinth seal by the realtionship:

$$D1 = Dp \times \frac{d1}{d2} \times \frac{C1}{C2}$$

3. Measuring method according to claim 2, characterized in that a single gas analyser is used successively at steps e) and f) of the method.

4. Measuring method according to claim 2, characterized in that two separate gas analysers are used simultaneously at steps e) and f) of the method.

5. Measuring method according to any one of claims 1 to 4 characterized in that the injections of gas at steps a) and b) are taken from a single source (20).

6. Measuring method according to any one of claims 1 to 5, characterized by the fact that the gas injection and the withdrawal of mixture take place through off-takes normally existing in the region of the labyrinth seal at the outlet of the compressor and in the region of the turbine, and intended for measurement of temperatures and pressures.

FIG.:1

FIG.:2